# EUROPÄISCHE PATENTSCHRIFT

(11) **EP 0 682 611 B1**
(45) Veröffentlichungstag und Bekanntmachung des Hinweises auf die Patenterteilung: **11.06.1997**
(21) Anmeldenummer: 92906884.9
(22) Anmeldetag: 16.03.1992
(51) Int. Cl.: B60S 1/08

(54) **VORRICHTUNG ZUM BETREIBEN EINES REGENDETEKTORS**
DEVICE FOR OPERATING A RAIN DETECTOR
DISPOSITIF POUR L'UTILISATION D'UN DETECTEUR DE PLUIE

(30) Priorität: 19.04.1991 DE 4112847
(43) Veröffentlichungstag der Anmeldung: 22.11.1995
(73) Patentinhaber: ROBERT BOSCH GMBH, 70442 Stuttgart (DE)
(72) Erfinder: MANGLER, Jürgen, D-7554 Kuppenheim 2 (DE); NOLTING, Peter, D-7582 Bühlertal (DE)
(86) Internationale Anmeldenummer: DE9200222
(87) Internationale Veröffentlichungsnummer: WO9218359

(56) Entgegenhaltungen:
- WO-A-83/02093
- WO-A-89/00119
- US-A- 4 916 374

## Beschreibung

### Stand der Technik

Die Erfindung geht aus von einer Vorrichtung zum Betreiben eines Regendetektors nach der Gattung des Hauptanspruchs. Aus der DE-PS 33 14 770 ist ein derartiger Regendetektor bekannt, der ein Signal zum Steuern einer Scheibenwischanlage abgibt. Das vom einem Sensor abgegebene Signal ist ein Maß für die Benetzung einer gegebenenfalls zu reinigenden Scheibe mit Wasser oder Schmutz.

Dem Regendetektor liegt ein optisches Meßverfahren zugrunde. Die von einer Strahlungsquelle durch ein Prisma in die Scheibe eingekoppelte Strahlung trifft auf die zu reinigende Scheibenoberfläche. Die an der mit Wasser benetzten oder verschmutzten äußeren Scheibenfläche unter einem bestimmten Winkel reflektierte Strahlung wird durch die Scheibe weitergeleitet und durch das Prisma von der Scheibe ausgekoppelt. Die reflektierte Strahlung wird von einem Strahlungssensor erfaßt, der ein Signal an eine nachgeschaltete Auswerteanordnung abgibt. Es werden nur diejenigen von der Strahlungsquelle ausgesandten und an der Scheibenoberfläche reflektierten Strahlungsanteile vom Strahlungssensor erfaßt, die an der Scheibenfläche unter dem Winkel der Totalreflexion abgehen. Der Strahlungssensor gibt ein Signal mit einem bestimmten Pegel bei ungestörter Totalreflexion ab, der einem Ruhepegel entspricht. Bei Veränderungen der Intensität der totalreflektierten Strahlung durch Wassertropfen oder Schmutzpartikel ändert sich der Pegel des abgegebenen Signals, das mit einer Schwelle verglichen wird. Bei Überschreiten der Schwelle wird das Einschaltsignal für eine Scheibenwischanlage abgegeben.

Die Schwelle, mit der das vom Sensor abgegebene Signal verglichen wird, wird in Abhängigkeit vom Extremwert des Signalpegels selbständig nachgestellt. Diese Nachführung der Schwelle kompensiert eine Langzeitdrift und eine Temperturtrift der elektronischen Schaltung und berücksichtigt den Scheibenoberflächenzustand, der sich beispielsweise durch Kratzer ständig verändert. Der Bereich zur Nachführung ist begrenzt auf den von einem als Komparator beschalteten Verstärker verarbeitbaren Eingangsspannungsbereich.

Neben einer Langzeit- und einer Temperaturdrift hängt der Ruhepegel des vom Sensor abgegebenen Signals stark von den konstruktiven Gegebenheiten bei der Montage des Regendetektors an die Scheibe ab. Zusätzlich zu Fertigungstoleranzen bei der Herstellung elektronischer und optischer Bauteile sind unterschiedliche Scheibendicken, unterschiedliche spektrale Transmissionskoeffizienten der Scheiben sowie insbesondere die Ausführung des Anbaus des Regendetektors an die Scheibe zu berücksichtigen.

Der Erfindung liegt die Aufgabe zugrunde, eine Vorrichtung zum Betreiben eines Regendetektor anzugeben, die sicherstellt, daß der Pegel des von einem Sensor abgegebenen Signals weitgehend unabhängig von der Herstellung und Montage auf leicht handzuhabende Werte festgelegt ist.

Die Aufgabe wird durch die im Hauptanspruch angegebenen Merkmale gelöst.

### Vorteile der Erfindung

Die erfindungsgemäße Vorrichtung weist den Vorteil auf, daß durch die Regelung des Pegels des vom Sensor abgegebenen, einer sauberen Scheibe entsprechenden Signals auf einen vorgegebenen Ruhepegel Herstellungstoleranzen einzelner Bauteile des Regendetektors sowie Toleranzen bei der Montage des Regendetektors in einem weiten Bereich ausgleichbar sind. Dieser Bereich kann mehrere Dekaden umfassen. Der Regendetektor kann somit nahezu unabhängig von der Applikation realisiert werden. Eine Nachführung der Schwelle, mit der das Ruhepotential verglichen wird, um aus diesem Vergleich ein Schaltsignal für die Scheibenwischanlage zu erhalten, ist nicht mehr erforderlich.

Vorteilhafte Weiterbildungen und Verbesserungen der erfindungsgemäßen Vorrichtung ergeben sich aus Unteransprüchen.

Die Regelung ist besonders einfach durchzuführen, wenn der Regendetektor Mittel zum Verstärken des vom Sensor abgegebenen Signals enthält, deren Verstärkungsfaktor geändert wird.

Sofern der Regendetektor Mittel zum Abgeben eines Signals enthält, dessen Änderungen durch den Scheibenzustand vom Sensor erfaßt werden, ist die Regelung dadurch besonders einfach zu realisieren, daß die Leistung des abgegebenen Signals verändert wird.

Der Regendetektor ist besonders preisgünstig mit einem optoelektronischen Strahlungssensor realisierbar, der das von einer Strahlungsquelle abgegebene Signal empfängt.

Die erfindungsgemäße Vorrichtung eignet sich insbesondere zur Anwendung bei Kraftfahrzeugen, weil die manuelle Bedienung einer Scheibenwischanlage durch den Fahrer entfällt. Durch den Wegfall einer Kalibrierung des Regendetektors ergeben sich in der Serienproduktion Preisvorteile.

Weitere vorteilhafte Weiterbildungen und Ausgestaltungen der erfindungsgemäßen Vorrichtung ergeben sich aus der folgenden Beschreibung.

### Zeichnung

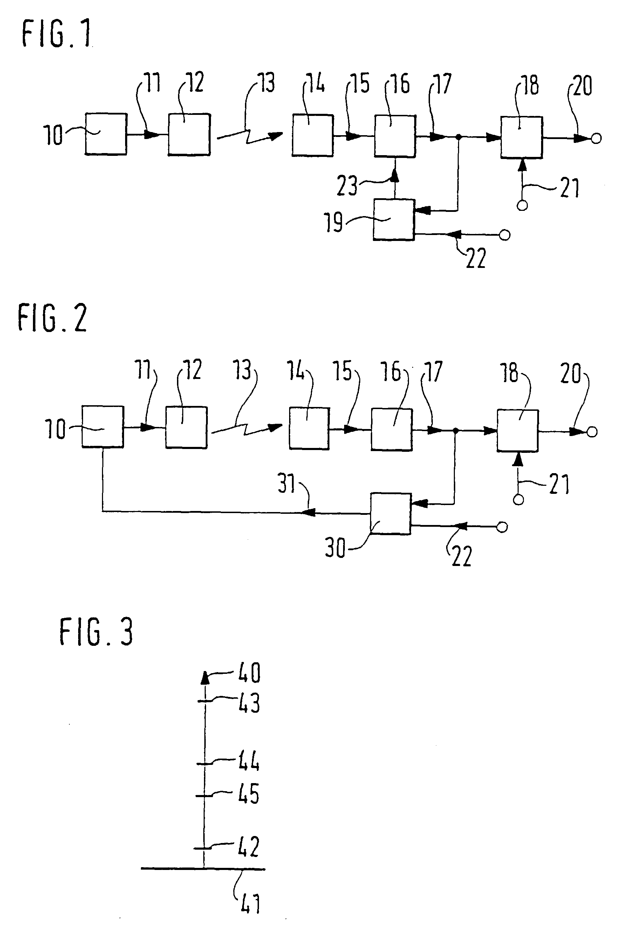

Figuren 1 und 2 zeigen Blockschaltbilder einer erfindungsgemäßen Vorrichtung zum Betreiben einer Regendetektors und Figur 3 zeigt Signalpegel, die in der erfindungsgemäßen Vorrichtung auftreten.

In Figur 1 ist eine Anordnung 10 gezeigt, die ein Steuersignal 11 an Mittel 12 angibt, die ein Signal 13 abgeben, das dem Meßeffekt zugrundeliegt. Das Signal 13 wird von einem Sensor 14 erfaßt, der ein Sensorsignal 15 an eine Signalaufbereitung 16 abgibt. Die Signalaufbereitung 16 gibt ein aufbereitetes Sensorsignal 17 an eine Auswertung 18 und an einen Regler 19 weiter. Die Auswertung 18 ermittelt ein Schaltsignal 21 zum Einschalten einer nicht gezeigten Scheibenwischanlage in Abhängigkeit vom aufbereiteten Sensorsignal 17 und in Abhängigkeit von einer vorgebbaren Schwelle 21. Der Regler 19 ermittelt in Abhängigkeit vom aufbereiteten Sensorsignal 17 und in Abhängigkeit von einem Referenzsignal 22 ein Stellsignal 23, das der Signalaufbereitung 16 zugeführt ist.

In Figur 2 ist ein anderes Ausführungsbeispiel der erfindungsgemäßen Vorrichtung gezeigt, das gegenüber dem in Figur 1 gezeigten Ausführungsbeispiel einen anderen Regler 30 zeigt, der ein anderes Stellsignal 31 an die Steueranordnung 10 abgibt. Die restlichen Teile der in Figur 2 gezeigten Vorrichtung stimmen mit den in Figur 1 gezeigten Teilen überein und tragen deshalb jeweils dieselben Bezugszahlen.

In Figur 3 sind Pegel 40 von Signalen eingetragen, die in den Ausführungsbeispielen der erfindungsgemäßen Vorrichtung in Bezug auf einen Bezugspegel 41 auftreten. Die Pegel 42, 43 sind untere und obere Grenzen des Sensorsignals 15 oder des aufbereiteten Sensorsignals 17, die in Bezug auf nachfolgende Anordnungen festgelegt sind. Der Pegel 44 ist ein Ruhepegel, den das Sensorsignal 15 oder das aufbereitete Sensorsignal 17 im eingeregelten Zustand bei einer sauberen Scheibe aufweist. Der Pegel 45 entspricht der Schwelle 21, die in der Auswertung 18 auftritt.

Die erfindungsgemäße Vorrichtung wird anhand der in den Figuren 1 und 2 gezeigten Blockschaltbilder der Ausführungsbeispiele in Verbindung mit den in Figur 3 gezeigten Pegeln 40 näher erläutert:

Die Vorrichtung wird anhand eines optoelektronischen Regendetektors erläutert, der die Steueranordnung 10, die Mittel 12, den Sensor 14, gegebenenfalls die Signalaufbereitung 16 sowie die Auswertung 18 enthält. Anstelle eines optoelektronischen Regendetektors eignet sich die erfindungsgemäße Vorrichtung auch für jedes andere Detektorprinzip, bei dem der Sensor 14 und gegebenenfalls die Signalaufbereitung 16 vorgesehen sind. Bekannt sind akustische, kapazitive und resistive Regendetektoren, die einen Sensor 14 enthalten. Der akustische Regensensor setzt Schallwellen in ein entsprechendes elektrisches Ausgangssignal um. Der resistive Regensensor verändert seinen Leitwert durch Feuchtigkeit, und der kapazitive Sensor verändert seinen Kapazitätswert bei Auftreten von Feuchtigkeit oder Schmutz auf der Scheibe, die einer Veränderung des Dielektrikums eines Kondensators entsprechen. Weiterhin gibt es Regendetektoren, die einen Sensor 14 enthalten, der die von Mitteln 12 abgegebenen Signale empfängt. Der der Beschreibung zugrundeliegende Regendetektor 10, 12, 14, 16, 18 beruht auf einem solchen Meßprinzip, bei dem die Mittel 12 eine Strahlungsquelle enthalten, welche eine optische Strahlung 13 abgeben, die von einem Strahlungssensor 14 empfangen werden. Daneben sind noch andere Regendetektoren 10, 12, 14, 16, 18 bekannt, bei denen die Mittel 12 hochfrequente elektromagnetische Strahlung emittieren, deren Frequenz vorzugsweise im GHz-Bereich liegt. Der Sensor 14 ist dann als Mikrowellensensor ausgestaltet.

Bei den in den Figuren 1 und 2 gezeigten Ausführungsbeispielen geben die Mittel 12 eine optische Strahlung 13 ab, die von wenigstens einem Strahlungssensor 14 aufgenommen wird. Die Ausgestaltung der optischen Strecke, in welche die Scheibe einbezogen ist, wird hier nicht näher beschrieben. Diese Strecke ist beispielsweise im eingangs diskutierten Stand der Technik näher beschrieben. Die Mittel 12, welche wenigstens eine Strahlungsquelle enthalten, werden von der Steueranordnung 10 mit dem Steuersignal 11 zur Abgabe des Strahlungssignals 13 veranlaßt. Die Steueranordnung 10 enthält beispielsweise eine Treiberschaltung, mit der die Leistung der Strahlungsquelle veränderbar ist. In dem in Figur 1 gezeigten Ausführungsbeispiel ist die Strahlungsleistung vorgegeben. Die vom Strahlungssensor 14 empfangene Strahlung wird durch eine Benetzung der Scheibe mit Schmutz oder Feuchtigkeit durch Strahlungsauskopplung geschwächt. Einfluß auf die empfangene Strahlungsleistung haben auch die Toleranzen der benötigten elektrischen und optischen Bauelemente. Einen erheblichen Einfluß haben die Scheibendicke sowie der Transmissionskoeffizient des Scheibenmaterials. Weiterhin bestimmen die Qualität der optischen Ankopplung der Mittel 12 und des Sensors 14 an die Scheibe sowie deren Positionierung zueinander in erheblichen Maße die empfangbare Strahlungsleistung.

Erfindungsgemäß ist vorgesehen, daß diese Einflüsse durch eine Regelung eliminiert werden. Vorgesehen ist deshalb der Regler 19 oder der andere Regler 30. Der Regler 19 gibt das Stellsignal 23 an die Signalaufbereitung 16 ab in Abhängigkeit von einem Vergleich zwischen dem aufbereiteten Sensorsignal 17 und dem Referenzsignal 22. Die Signalaufbereitung 16 kann auch entfallen, sofern der Sensor 14 ein Signal 15 abgibt, das unmittelbar ausgewertet wird. Die Signalaufbereitung 16 kann auch integriert mit dem Sensor 14 hergestellt sein, wobei außerhalb des so entstandenen Sensorbauelementes nur noch das aufbereitete Sensorsignal 17 auftritt. Das Stellsignal 23 beeinflußt beispielsweise den Verstärkungsfaktor eines in der Signalaufbereitung 16 enthaltenen Verstärkers, so daß das aufbereitete Sensorsignal 17 bei einer sauberen Scheibe den vorgegebenen Ruhepegel 44 aufweist. Der Ruhepegel 44 ist zweckmäßigerweise an die nachfolgende Auswertung 18 angepaßt. Sofern die Auswertung 18 analoge Komponenten enthält, liegt der Ruhepegel 44 etwa in der Mitte zwischen der unteren Pegelgrenze 42 und der oberen Pegelgrenze 43, innerhalb der die Auswertung 18 arbeitet. Mit dieser Maßnahme wird einerseits eine Übersteuerung von gegebenenfalls vorhandenen Verstärkern vermieden und andererseits eine Ausnutzung eines maximalen Signalhubs bei Änderungen des aufbereiteten Sensorsignals 17 möglich, wodurch sich die Sicherheit gegenüber Störsignalen erhöhen läßt. Der Ruhepegel 44 wird in Bezug auf das Referenzsignal 22 festgelegt. Der Pegel des Referenzsignals entspricht deshalb zweckmäßigerweise dem Ruhepegel 44.

Die Auswertung 18, der das Sensorsignal 15 oder das aufbereitete Sensorsignal 17 zugeleitet ist, ermittelt durch Vergleich des Signals 15, 17 mit der vorgegebenen Schwelle 21 das Schaltsignal 20, das einer in den Figuren nicht gezeigten Scheibenwischanlage zugeleitet wird. Diese Schwelle weist den vorgegebenen Pegel 45 auf, der im gezeigten Beispiel einen bestimmten Betrag unterhalb des Ruhepegels 44 liegt. Der Abstand zwischen den beiden Pegeln 44, 45 kann sowohl fest vorgegebenen als auch variabel gehalten werden. Eine Benetzung der Scheibe oder ein Niederschlag von Feuchtigkeit führt zu einer Abnahme des Pegels des Sensorsignals 15 oder des aufbereiteten Sensorsignals 17, der dann vom Ruhepegel 44 abweicht. Nach dem Überschreiten der auf den Pegel 45 festgelegten Schwelle 21 gibt die Auswertung 18 mit dem Schaltsignal 20 ein Einschaltsignal ab.

Anstelle der in Figur 1 gezeigten Nachführung einer Verstärkung des Sensorsignals 15 ist in Figur 2 mit dem anderen Regler 30, der das andere Stellsignal 31 abgibt, eine Nachführung der von den Mitteln 12 abgegebenen Signalleistung mit Hilfe der Steueranordnung 10 vorgesehen.

Besonders vorteilhaft ist auch eine Kombination von beiden Nachführungen, weil der Signalnachführungsbereich nochmals um einige Dekaden vergrößert wird. Der Regler 19, 30 muß derart ausgebildet sein, daß sich das Stellsignal 23, 31 im Vergleich zum Sensorsignal 15 oder zum aufbereiteten Sensorsignal 17 nur äußerst langsam ändert, damit Veränderungen des Sensorsignals 15 oder des aufbereiteten Sensorsignals 17, die eine Scheibenzustandsänderung wiedergibt, nicht ausgeregelt werden.

In einer Ausgestaltung ist ein Kalibriervorgang bei der ersten Inbetriebnahme der erfindungsgemäßen Vorrichtung vorgesehen, wobei sichergestellt ist, daß der Ruhepegel 44 des Sensorsignals 15 oder des aufbereiteten Sensorsignals 17 dem einer sauberen Scheibe entspricht. Im anschließenden Betrieb kann eine Einregelung auf einen Langzeit-Mittelwert des Sensorsignals 15 vorgesehen sein, wobei insbesondere die Mittelwertbildung nach dem Auftreten von Signaländerungsgeschwindigkeiten, die einen bestimmten vorgegebenen Wert überschreiten, unterbrochen wird. Mit dieser Maßnahme wird eine Zuordnung des Ruhepegels 44 zu einer relativ stark verschmutzten, oder mit Flüssigkeit benetzten Scheibe vermieden.

Eine andere Möglichkeit, den Kalibriervorgang durchzuführen, ist einige Sekunden nach einem Wasch-Wisch-Zyklus einer Scheibenreinigungsanlage gegeben. Auch hier ist es sinnvoll, einen Maximalwert der Signaländerungsgeschwindigkeit vorzugeben, damit sichergestellt ist, daß es nicht regnet und daß gegebenenfalls vorhandene Schlieren abgetrocknet sind.

## Patentansprüche

1. Vorrichtung zum Betreiben eines einen Sensor enthaltenden Regendetektors für eine Scheibe, mit Mitteln zum Vergleichen des Pegels eines vom Sensor abgegebenen Signals mit einer Schwelle, wobei die Vergleichsmittel ein Schaltsignal an eine Scheibenwischanlage abgeben, dadurch gekennzeichnet, daß Mittel (19, 30) vorgesehen sind, die den Pegel des vom Sensor (14) abgegebenen, einer sauberen Scheibe entsprechenden Signals (15, 17) mit einem Referenzsignal (22) vergleichen und die das Signal (15, 17) auf einen vorgegebenen Ruhepegel (44) regeln.

2. Vorrichtung nach Anspruch 1, dadurch gekennzeichnet, daß der Ruhepegel (44) dem Pegel des Referenzsignals (22) entspricht.

3. Vorrichtung nach Anspruch 1 oder 2, dadurch gekennzeichnet, daß der Regendetektor (10, 12, 14, 16, 18) eine Signalaufbereitung (16) aufweist, die Mittel zum Verstärken des Sensorsignals (15) enthält, deren Verstärkungsfaktor durch ein vom Regler (19) abgegebenes Stellsignal (23) verändert wird.

4. Vorrichtung nach einem der Ansprüche 1 bis 3, dadurch gekennzeichnet, daß der Regendetektor (10, 12, 14, 16, 18) Mittel (12) zum Abgeben eines Signals (13) enthält, auf dem der Meßeffekt beruht, deren Leistungsabgabe mit einer Steueranordnung (10) durch ein vom Regler (30) abgegebenes Stellsignal (31) verändert wird.

5. Vorrichtung nach einem der vorhergehenden Ansprüche, dadurch gekennzeichnet, daß der Regendetektor (10, 12, 14, 16, 18) als Mittel (12) eine Strahlungsquelle enthält, die eine Strahlung (13) emittiert, die von einem Strahlungssensor (14) empfangen wird.

6. Vorrichtung nach einem der vorhergehenden Ansprüche, dadurch gekennzeichnet, daß als Ruhepegel (44) der Langzeit-Mittelwert des Sensorsignals (15) vorgesehen ist.

7. Vorrichtung nach einem der Ansprüche 1 bis 5, dadurch gekennzeichnet, daß die Regelung auf den Ruhepegel (44) zu vorgegebenen Zeiten erfolgt.

8. Vorrichtung nach einem der vorhergehenden Ansprüche, dadurch gekennzeichnet, daß die Regelung auf den Ruhepegel (44) ab einer vorgegebenen Signaländerungsgeschwindigkeit des Signals (15, 17) gesperrt ist.

## Claims

1. Device for operating a rain detector, containing a sensor, for a pane, having means for comparing the level of a signal which has been output by the sensor with a threshold, the comparison means outputting a switching signal to a wiper system, characterized in that means (19, 30) are provided which compare the level of the signal (15, 17) which has been output by the sensor (14) and corresponds to a clean pane with a reference signal (22) and which adjust the signal (15, 17) to a prescribed quiescent level (44).

2. Device according to Claim 1, characterized in that the quiescent level (44) corresponds to the level of the reference signal (22).

3. Device according to Claim 1 or 2, characterized in that the rain detector (10, 12, 14, 16, 18) has a signal conditioning device (16) which contains means for amplifying the sensor signal (15), the amplification factor of which means is changed by an adjustment signal (23) which is output by the regulator (19).

4. Device according to one of Claims 1 to 3, characterized in that the rain detector (10, 12, 14, 16, 18) contains means (12) for outputting a signal (13) on which the measuring effect is based, the output power of which means (12) is changed using a control arrangement (10) by means of an adjustment signal (31) which is output by the regulator (30).

5. Device according to one of the preceding claims, characterized in that the rain detector (10, 12, 14, 16, 18) contains, as means (12), a radiation source which emits radiation (13) which is received by a radiation sensor (14).

6. Device according to one of the preceding claims, characterized in that the long-term mean value of the sensor signal (15) is provided as quiescent level (44).

7. Device according to one of Claims 1 to 5, characterized in that the adjustment to the quiescent level (44) takes place at prescribed times.

8. Device according to one of the preceding claims, characterized in that the adjustment to the quiescent level (44) is disabled above a prescribed rate of change of the signal (15, 17).

## Revendications

1. Dispositif servant à faire fonctionner un détecteur de pluie, comprenant un capteur, pour une vitre, des moyens servant à comparer à un seuil le niveau d'un signal délivré par le capteur, les moyens de comparaison délivrant un signal de branchement à une installation d'essuie-glace,
caractérisé
par des moyens (19, 30), qui comparent le niveau du signal (15, 17) délivré par le capteur (14), correspondant à une vitre propre, à un signal de référence (22) et qui règlent le signal (15, 17) sur un niveau de repps prédéfini (44).

2. Dispositif selon la revendication 1,
caractérisé en ce que
le niveau de repos (44) correspond au niveau du signal de référence (22).

3. Dispositif selon la revendication 1 ou 2,
caractérisé en ce que
le détecteur de pluie (10, 12, 14, 16, 18) présente un circuit de préparation de signal (16), qui contient des moyens pour amplifier le signal de détection (15), dont le coefficient d'amplification est modifié par un signal de réglage (23), délivré par le dispositif de réglage (19).

4. Dispositif selon l'une des revendications 1 à 3,
caractérisé en ce que
le détecteur de pluie (10, 12, 14, 16, 18) contient des moyens (12) servant à délivrer un signal (13), sur lequel repose l'effet de mesure, dont la puissance délivrée est modifiée avec un dispositif de commande (10) par un signal de réglage (31) délivré par le dispositif de réglage (30).

5. Dispositif selon l'une des revendications précédentes,
caractérisé en ce que
le détecteur de pluie (10, 12, 14, 16, 18) contient comme moyens une source de rayonnement, qui émet un rayonnement (13), qui est reçu par un capteur de rayonnement (14).

6. Dispositif selon l'une des revendications précédentes,
caractérisé en ce que
comme niveau de repos (44) on prévoit la valeur moyenne en longue durée du signal de détection (15).

7. Dispositif selon l'une des revendications 1 à 5,
caractérisé en ce que
le réglage sur le niveau de repos (44) a lieu à des instants prédéfinis.

8. Dispositif selon l'une des revendications 1 à 5,
caractérisé en ce que
le réglage sur le niveau de repos (44) est bloqué à partir d'une vitesse prédéfinie de variation du signal (15, 17).
